# EUROPEAN PATENT APPLICATION

(11) **EP 2 026 592 A1**
(43) Date of publication of application: **18.02.2009**
(21) Application number: 07721478.1
(22) Date of filing: 18.06.2007
(51) Int. Cl.: H04Q 7/20

(54) **METHOD AND DEVICE FOR CONTROLLING CELL POWER**

(30) Priority: 20.06.2006 CN 200610093617
(71) Applicant: Huawei Technologies Co., Ltd., Longgang District, Shenzhen Guangdong 518129 (CN)
(72) Inventor: YAO, Jie, Guangdong 518129 (CN); GONG, Jie, Guangdong 518129 (CN)
(74) Representative: Tolan, Olivia
(86) International application number: PCT/CN2007/001905
(87) International publication number: WO 2008/000146

(57) **Abstract**

A method for controlling cell power during the changing procedure of cell power includes: setting power changing reference quantity; adjusting cell power gradually according to the power changing reference quantity. A device for controlling cell power during the changing procedure of cell power includes: a setting unit, for setting and/or adjusting power changing reference quantity; an adjusting unit, for adjusting cell power gradually according to the power changing reference quantity. By performing the method of the present invention, user terminals in the cell could access and quit the cell smoothly or realize handoff between the cells.

## Description

This application claims the priority of Chinese patent application No. 200610093617.8, entitled "METHOD AND DEVICE FOR CONTROLLING CELL POWER DURING CELL POWER CHANGE" and filed with the State Intellectual Property Office on June 20, 2006, which is incorporated herein by reference in its entirety.

### FIELD OF THE INVENTION

The present invention relates to mobile communication technologies, and in particular, to a method and a device for controlling cell power during cell power change.

### BACKGROUND OF THE INVENTION

A mobile communication system usually consists of successively networked cells which form a cellular coverage, i.e., a cellular network, If a cell in the cellular network shifts from a running state into a shut-down state due to maintenance or other reasons, according to cell breathing principle, signals from adjacent cells may cover this cell. Especially in some urban locations where distances between stations are small, most area in this cell may be covered by signals from adjacent cells. User terminals in the area covered by signals from adjacent cells may work normally with various services, such as voice and data services. Cell breathing function means that the coverage area of each cell is dynamic. When the loads of two adjacent cells are different, the cell with heavier load may decrease its pilot transmission power, thus user terminals at the edge of the cell with heavier load may handoff to the adjacent cell with lighter load because of insufficient pilot power. Therefore, the load of the cell with heavy load may be shared, and the system capacity may be increased.

However, if the power of a cell is changed suddenly from its practical transmission power to zero, no available cell branch would exist in the active set of a user terminal in the cell because signals from adjacent cells do not reach the entrance threshold for soft handoff. Call drop may happen to the user terminal if it formerly is in service connection state. Additionally, network drop may happen to a user terminal in idle state in the cell.

If the power of a cell is changed directly from zero to practice transmission power, for example the cell is set up, signals from the cell would be equivalent to strong co-channel interference to user terminals in service connection state in adjacent cells, because user terminals in service connection state in adjacent cells cannot establish a soft handoff branch in the set up cell in time. For example, if the Quality of Service (QoS) of a user terminal in an adjacent cell is Ec/Io, (chip energy/total energy within received bandwidth), the QoS of the user terminal becomes Ec/ (Io + received transmit power of the set up cell) when the cell is set up. It can be seen that, the stronger the received transmission power of the set up cell is, the worse the signal quality received by the user terminal will be, and the more serious impact on the user's communication quality will be, or even call drop may occur. User terminals originally in off-network state in the set up cell may initiate a registration after receiving signals from the set up cell, and access the network randomly according to random access principle. Because the time at which user terminals receive signals from the set up cell is almost the same, a larger amount of user terminals may cause a higher probability of access collision. Therefore part of the user terminals would increase transmission power continually which results in the increase of noise in the receiving frequency band of the set up cell.

Additionally, when the cell power is to be adjusted due to some special reasons, the normal way is also adjusting the cell power from its initial level to the new level instantly. In other words, the cell power is changed abruptly, which also imposes an impact on the communication quality of user terminals in service connection state.

With the development of radio access technologies, the service capability provided by 3G mobile communication systems, such as WCDMA, is much stronger than that provided by 2G mobile communication systems, such as GSM. Code Division Multiple Access (CDMA) technology is employed in WCDMA systems, in which base stations provide much more channels than base stations in GSM systems, Therefore, when the cell power changes, especially in the case of a sudden change of cell power in hot areas, care should be taken to reduce the impact on the user terminals and the communication system.

It can be seen from above, currently during the process of cell power change, including cell setup or cell deletion, the communication quality of user terminals may be affected by the sudden change of cell power.

### SUMMARY OF THE INVENTION

Embodiments of the present invention provide a method and a device for controlling cell power during cell power change to avoid the impact on the communication quality of a user terminal caused by a sudden change of cell power.

The technical solutions according to embodiments of the present invention mainly include:

A method for controlling cell power, including:
setting a power change reference; and
adjusting the cell power step by step according to the power change reference.

A device for controlling cell power, including:
a setting unit, adapted to set a power change reference; and
an adjusting unit, adapted to adjust the cell power step by step according to the power change reference.

In the embodiments of the present invention, a power change reference is provided for controlling cell power by adjusting the cell power step by step during cell power change. In such a case, the quality of signals received by a user terminal from the cell is changed step by step. Therefore, the impact on the communication quality of the user terminal caused by a sudden change of cell power may be avoided.

### BRIEF DESCRIPTION OF THE DRAWINGS

Figure 1 is a flow chart of a first embodiment of the method for controlling cell power in a cell setup process according to the present invention;

Figure 2 is a flow chart of a second embodiment of the method for controlling cell power in a cell setup process according to the present invention;

Figure 3 is a flow chart of a first embodiment of the method for controlling cell power in a cell deletion process according to the present invention;

Figure 4 is a flow chart of a second embodiment of the method for controlling cell power in a cell deletion process according to the present invention;

Figure 5 is a structural diagram of a first embodiment of the device for controlling cell power according to the present invention; and

Figure 6 is a structural diagram of a second embodiment of the device for controlling cell power according to the present invention.

### DETAILED DESCRIPTION OF THE EMBODIMENT

Preferred embodiments of the present invention are described below in detail in conjunction with the drawings, First of all, it should be pointed out that the terms, or words used in the embodiments of the present invention and the meanings of claims are not simply limited to their literal and common meanings. Instead, they also include the meanings and concepts conforming to the technology of the present invention. The inventor should give an appropriate definition of the terms so as to try his best to describe the embodiments of the present invention. Therefore, the configurations provided in the specification and the drawings of the present invention are only preferred embodiments of the present invention, rather than an enumeration of all the technical characteristics of the embodiments of the present invention. It should be understood that there may be various equivalent solutions or modified solutions to replace the embodiments of the present invention.

First of all, it should be noted that according to the embodiments of the present invention the cell setup includes unblocking a cell, and the cell deletion includes blocking a cell. In the method for controlling cell power during cell power change according to the embodiments of the present invention, the cell power is adjusted step by step, so that a user in the cell may smoothly access or exit the cell, or perform a handoff between cells. Since the cell power is adjusted step by step, operations need to be carried out based on a certain index. For this reason, a power change reference is provided in the embodiments of the present invention, and adjusting the cell power is carried out according to this power change reference.

The power change reference is variable, and may include power change step and/or power change frequency. The power change step represents the amplitude of power change, and its unit could be dBm. And the power change frequency represents the number of power changes per unit of time, and its unit could be Hz, Of course, the reference of power change frequency may be changed to reference of power change time interval, and then its unit could be millisecond (ms) or second (s). In the embodiments of the present invention, any one of the power change step and the power change frequency may be used as the power change reference. For example, when the power change step is designated as the power change reference, the power change time interval is determined or modified according to the practical situation. And when the power change frequency is designated as the power change reference, the power change step is also determined or modified according to the practical situation,

In general, in a cell setup process, the cell power should be changed from zero to practice cell power. If the cell power is adjusted step by step, the cell power should be increased step by step. However, for some special reasons, the cell power may be required to decrease one or more times and then increase again. In the embodiments of the present invention, the cell power is allowed to decrease one or more times in the process of increasing cell power step by step; and the cell power is also allowed to increase one or more times in the process of decreasing cell power step by step.

The cell power may be changed in the range between zero and practical cell power.

In the embodiments of the present invention, the cell power may be adjusted by three approaches which include: adjusting the attenuation gain of the channel attenuator in the radio frequency part, or adjusting the static power level of the cell in baseband part or adjusting the pilot channel power. Of course, the cell power may also be adjusted in a combination of any two or three of the above approaches. For example, a WCDMA base station may control the cell power by controlling the pilot channel power; a CDMA2000 base station may control the cell power by controlling the static power level of the cell in baseband part, i.e., cell gain, and by controlling the channel attenuator in the radio frequency part. Specifically, changing the attenuation gain of the channel attenuator in the radio frequency part refers to adjusting power in the radio frequency part of a base station; changing the static power level of a cell in baseband part refers to adjusting power in the baseband processing part of a base station; and changing the pilot channel power refers to adjusting power in a base station controller (BSC) or a base station.

The methods for controlling cell power during cell power change are illustrated respectively below according to the embodiments of the present invention.

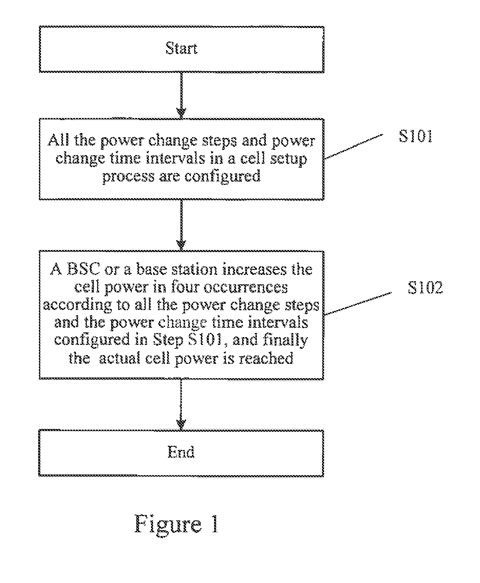

Figure 1 is a flow chart of a first embodiment of the method for controlling cell power in a cell setup process.

As shown in Figure 1, in Step S101, all the power change steps and power change time intervals in a cell setup process are configured. In other words, the amplitude and time interval for each change may be configured according to the target value, so that the number of changes may be determined. In this embodiment, the target value is the practical operating power, i.e., actual power.

For example, it is assumed that the total power of a base station is 37dBm and it requires that the actual power of the cell should be reached in 30s. The power of the cell may then be increased in four occurrences. The step of the first power change is set as 5 dBm, and at this time power change may be carried out without a time interval when the base station is started; or, of course, with a time interval pre-configured. In this embodiment, no time interval is set for the first power change. The step of the second power change is set as 10 dBm, and the second power change may be carried out in 10s after the base station is started. The step of the third power change is set as 15dBm, and the third power change may be carried out in 10s after the second power change. The step of the fourth power change is set as 7dBm, and the fourth power change may be carried out in 10s after the third power change. In order to avoid strong interference on user terminals in service connection state, the step of the first power change usually should not be too long. And the steps of the subsequent power changes may increase gradually. Thus, user terminals may rapidly access or perform a handoff to access the current cell without strong interference.

Then, the process proceeds to Step S102, a BSC or the base station increases the cell power in four occurrences according to all the power change steps and power change time intervals configured in Step S101. Finally, the actual cell power, i.e. 37dBm, is reached and the process for controlling cell power ends.

In Step S101 of the above embodiment, the four occurrences' power change steps and time intervals are configured before the power changes start, In practice, only the step and time interval of the latest power change may be configured. When the latest power change is completed, the step and time interval of the next power change may be configured.

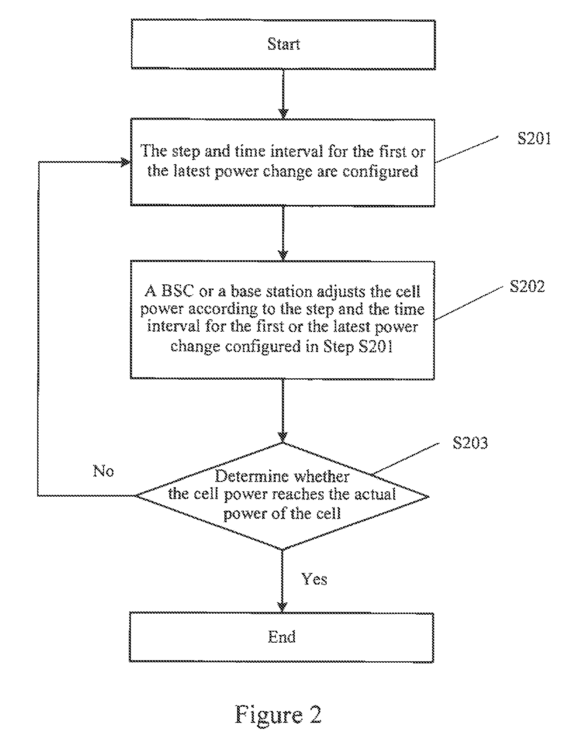

Figure 2 is a flow chart of a second embodiment of the method for controlling cell power in a cell setup process.

As shown in Figure 2, in Step S201, the step and time interval for the first or the latest power change are configured. In other words, the amplitude for each change may be configured according to the target value and the current system environment. In this embodiment, the target value is the practical operating power, i.e., actual power.

In Step S202, a BSC or a base station adjusts the cell power according to the step and the time interval for the first or the latest power change configured in Step S201.

In Step S203, detemine whether the cell power reaches its actual power. If the cell power reaches its actual power, the process for controlling cell power ends; otherwise, the process returns to Step S201 when the time interval is reached.

For example, it is assumed that the total power of the base station is 37dBm and it requires that the cell power should reach 37dBm in 30s. In this embodiment, the step of the first power change may be set as 5 dBm and the time interval may be set as 0s. After the first power change, since it is obvious that the cell power does not reach 37dBm, the step and time interval of the second power change are to be configured. By analogy, so long as the cell power does not reach 37dBm, the step and time interval of the latest power change, i.e. the next power change are to be configured till the cell power reaches 37dBm.

Because the step and the time of the power change are configured before each power change, the step may also be set as a negative value according to the practical situation; in other words, the power is decreased in the next power change. But, no matter the power is increased or decreased, it should be ensured that the cell power reaches 37dBm in 30s. It should be pointed out that, 30s is only taken as an example, and the due time may be configured according to practical requirement.

In the above two embodiments, the process for changing the cell power from zero to the actual power during a cell setup is accomplished by a method for increasing the cell power step by step. Increasing the cell power step by step is equivalent to increase the coverage radius of signals from a cell step by step, User terminals in the overlapped coverage area of the cell and its adjacent cells may receive signals from the cell one after another. And the quality of signals from the cell detected by one of the user terminals may increase gradually. When the entrance threshold of soft handoff branch is reached, the cell branch is added in the active set of one of the user terminals, and the soft handoff branch is established, In this way, the objective is achieved that absorbing a user terminal with the prerequisite of not influencing communication quality. For user terminals in off-network state in the planned coverage range of the cell, as the coverage radius of signals from the cell increase gradually, user terminals in different locations receive signals from the cell one after another in the direction from the cell center to the cell edge. Thus user terminals may register one after another, and discretization of access may be realized and access collision may be reduced.

Soft hand off means that when performing a handoff, a user terminal at first connects with a base station of a new cell and then disconnects from the base station of the original cell. In the handoff process, the base station of the original cell and the base station of the new cell simultaneously serve the user terminal while the user terminal crossing cells. Soft handoff function may increase the reliability of cell-crossing handoff. The communication links between the terminal and a plurality of cells are referred as soft handoff branches. About entrance threshold of soft handoff branch it means that, when a user terminal detects that the receiving energy of a certain soft handoff branch reaches the threshold, it indicates that the branch meets the condition for being added in the active set of the user terminal. An active set refers to a set of different soft branches that provide services to the user terminal simultaneously.

In the above two embodiments, the method for controlling cell power in a cell setup process is illustrated. The method for controlling cell power in a cell deletion process will now be illustrated in two embodiments.

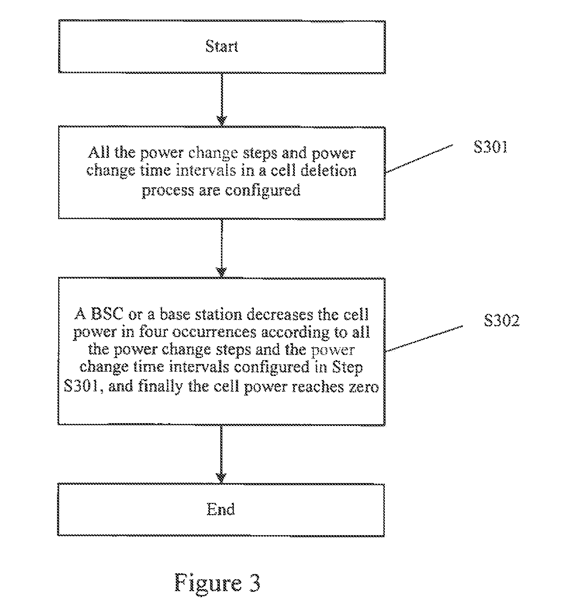

Figure 3 is a flow chart of a first embodiment of the method for controlling cell power in a cell deletion process.

As shown in Figure 3, in Step S301, all the power change steps and power change time intervals in a cell deletion process are configured. In other words, the amplitude and time interval of each change may be configured according to the target value, thus the number of changes may be determined. In this embodiment, the target value is zero.

It is assumed that the total power of a base station is 37dBm, and it requires that the cell power be changed to zero in 30s. The power of the cell may then be decreased in four occurrences. The step of the first power change is set as 5 dBm, and at this time power change may not require any time interval, or, of course, with a time interval prc-configured. In this embodiment, no time interval is set for the first power change. The step of the second power change is set as 10 dBm, and the second power change may be carried out in 10s after the first power change. The step of the third power change is set as 15dBm, and the third power change may be carried out in 10s after the second power change. The step of the fourth power change is set as 7dBm, and the fourth power change may be carried out in 10s after the third power change, Generally, to avoid a serious impact on the communication quality of user terminals in service connection state, the step of the first power change should not be too long, and the steps of subsequent power change may be increased gradually, As a result, a user terminal may rapidly exit the current cell and perform a handoff to an adjacent cell with a slight impact on its communication quality or even without any impact.

In Step S302, a BSC or a base station decreases the cell power in four occurrences according to all the power change steps and power change time intervals configured in Step S301. Finally the cell power reaches zero, and the process for controlling cell power ends.

In Step S30 of the above embodiment, the four occurrences' power change steps and time are configured before the power changes start. Practically, it is possible to configure only the step and the time for the latest power change, and the step and time for the next power change may be configured after the latest power change is completed.

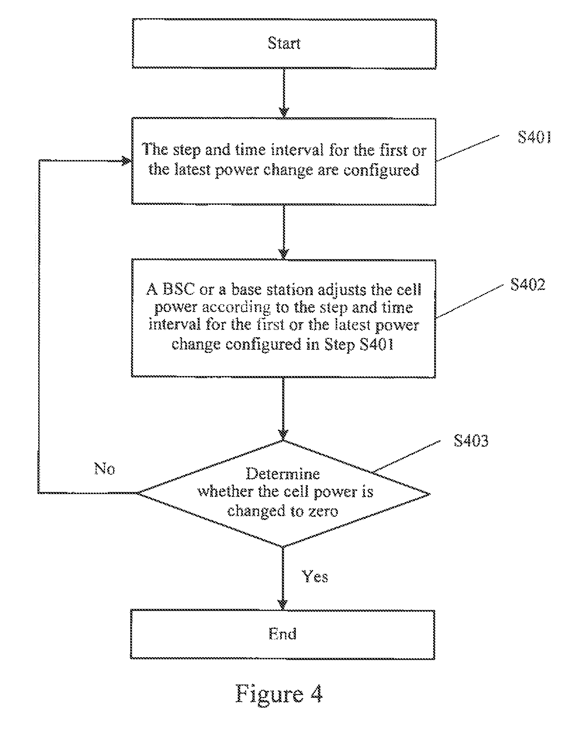

Figure 4 is a flow chart of a second embodiment of the method for controlling cell power in a cell deletion process.

As shown in Figure 4, in Step S401, the step and time interval for the first or the latest power change are configured. In other words, the amplitude for each change may be configured according to the target value and the current system environment. In this embodiment, the target value is zero.

In Step S402, a BSC or a base station adjusts the cell power according to the step and time interval for the first or the latest power change configured in Step S401,

In Step S403, determine whether the power of the cell is changed to zero. If the power of the cell is changed to zero, the process for controlling cell power ends; otherwise, the process returns to Step S401 when the time interval is reached.

For example, it is assumed that the total power of the base station is 37dBm and it requires that the power of the cell be changed to zero in 30s. in this embodiment, the step of the first power change may be set as 5 dBm and the time interval may be set as 0s. Since obviously the power of the cell after the first power change is not zero, the step and time interval of the second power change are to be configured. By analogy, so long as the power of the cell is not zero, the step and time of the latest power change, i.e., the next power change is to be configured till the power of the cell is zero.

Because the step and time of the power change are configured before each power change, the step may also be set as a negative value according to the practical situation; in other words, the power is increased in the next power change. But, no matter the power is decreased or increased; it should be ensured that the cell power changes from 37dBm to zero in 30s.

In the above two embodiments, the process for changing the cell power from the actual power to zero during a cell deletion is accomplished by a method for decreasing the cell power step by step. Decreasing the cell power step by step is equivalent to decrease the coverage radius of a cell gradually. The quality of signals from the cell detected by one of the user terminals in the overlapped coverage area of the cell and its adjacent cells may decrease gradually. According to dynamic soft handoff principle, at the same time, the adjacent cells' branch strength increases relatively, When the quality of signals from one of the adjacent cells reach the entrance threshold of soft handoff, the user terminal adds the adjacent cell into its active set. As the quality of signals from the cell is further decreased to reach the soft handoff deletion threshold and the deletion condition is fulfilled, the user terminal deletes the cell from its active set. In this way, the objective is achieved that the cell may exit each user terminal step by step with a slight impact on the communication quality of user terminals or even without any impact. User terminals in idle state may initiate an idle handoff one after another according to the change of the cell radius, thus performing a handoff to the adjacent cell.

It should be noted that, in practical application, the process of increasing the cell power from zero to an actual power may require 60s-120s, and the frequency of power change may be very high. For example, the time interval from one time of increasing the power to another may be in the order of ms. Then, the steps of power changes would be very small, and may be identical to each other. Nevertheless, the method according to the embodiments of the present invention can be applied under all these conditions.

It should be further noted that, in the above, four embodiments, the method according to the embodiments of the present invention is illustrated by examples of a cell setup process or a cell deletion process. It should be known by a person skilled in the art that in a cell setup process the power of a cell is increased from zero to an actual power, or in a cell deletion process the power of a cell is decreased from an actual power to zero. It should also be known by a person skilled in the art that, in practical application the cell power may be changed from a certain actual power to another actual power due to some reasons, for example, the cell power may be increased from 20dBm to 37dBm, or decreased from 35dBm to 25dBm. However, the method according to the embodiments of the present invention can be applied in all of the above cell power change processes. And the cell power is still controlled in a stepwise adjustment mode.

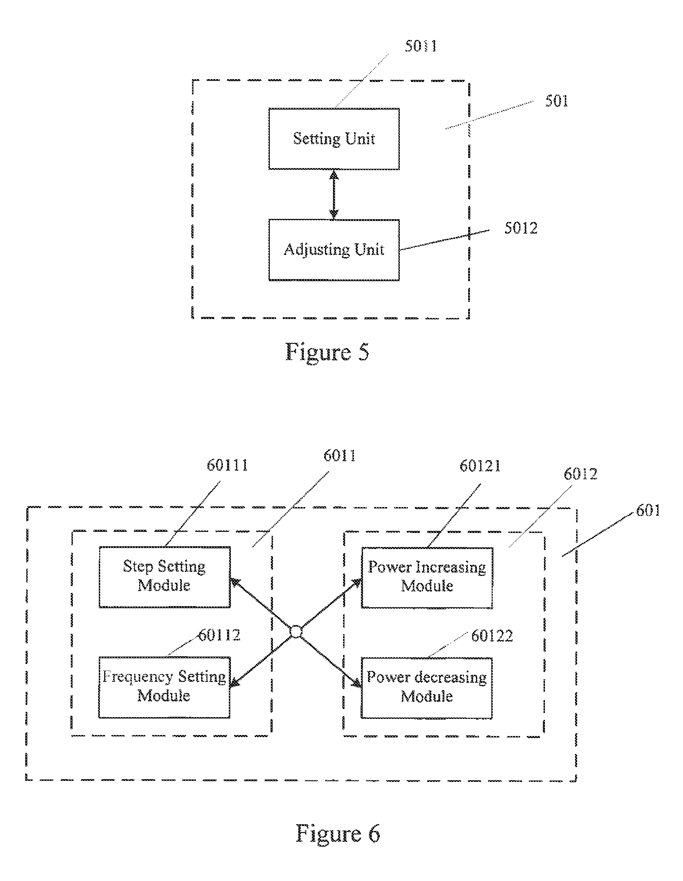

The embodiments of the present invention not only provide a method for controlling cell power during cell power change, but also provide a device for controlling cell power. Now, the device according to embodiments of the present invention will be illustrated in conjunction with Figure 5 and Figure 6 respectively.

As shown in Figure 5, a device 501 for controlling cell power includes: a setting unit 5011, adapted to set and/or adjust a power change reference; and an adjusting unit 5012, adapted to adjust the cell power step by step according to the power change reference. In particular, before adjusting the cell power, the adjusting unit 5012 actively requests the power change reference from the setting unit 5011. Additionally, after setting or adjusting the power change reference each time, the setting unit 5011 notifies the adjusting unit 5012 of the new power change reference.

The two units disclosed in Figure 5 are indispensable to realize the device according to the embodiments of the present invention. The device according to one preferred embodiment of the present invention is illustrated below in conjunction with Figure 6.

As shown in Figure 6, a device 601 for controlling cell power includes a setting unit 6011 and an adjusting unit 6012. In particular, the setting unit 601 includes a step setting module 60111 and a frequency setting module 60112. The step setting module 60111 is adapted to set and/or adjust the power change step, and the frequency setting module 60112 is adapted to set and/or adjust the power change frequency.

The adjusting unit 6012 is adapted to adjust the cell power in the range between zero and an actual cell power. The adjusting unit 6012 includes a power increasing module 60121 and a power decreasing module 60122, adapted to increase or decrease the cell power according to a power change reference provided by the setting unit 6011. The power change reference includes a power change step provided by the step setting module 60111 and a power change frequency provided by the frequency setting module 60112.

It should be noted that, the setting unit 6011 may include only one of the step setting module 60111 and the frequency setting module 60112. The adjusting unit 6012 in the device 601 for controlling cell power in a cell setup process may only include the power increasing module 60121; similarly, the adjusting unit 6012 in the device 601 for controlling cell power in a cell deletion process may only include the power decreasing module 60122.

Additionally, the adjusting unit 6012 may further include:
an attenuation gain adjusting unit, adapted to adjust the attenuation gain of the channel attenuator in the radio frequency part; and/or
a power level adjusting unit, adapted to adjust the static power level of the cell in baseband part; and/or
a pilot channel power adjusting unit, adapted to adjust the pilot channel power.

Correspondingly, the power increasing module 60121 may include:
an attenuation gain increasing module, adapted to increase the attenuation gain of the channel attenuator in the radio frequency part; and/or
a power level increasing module, adapted to increase the static power level of the cell in baseband part; and/or
a pilot channel power increasing module, adapted to increase the pilot channel power.

The power decreasing module 60122 may include:
an attenuation gain decreasing module, adapted to decrease the attenuation gain of the channel attenuator in the radio frequency part; and/or
a power level decreasing module, adapted to decrease the static power level of the cell in baseband part; and/or
a pilot channel power decreasing module, adapted to decrease the pilot channel power.

It can be seen from above that in the embodiments of the present invention, the cell power is controlled by means of adjusting the cell power step by step in the process of cell power change, In such a case, the quality of signals received from a cell by a user terminal is changed step by step. Especially, in a cell setup process, for user terminals in service connection state, the impact on the communication quality due to the increasing of cell power is relatively sluggish. When the quality of signals measured from the cell increases to a certain level, a user terminal may perform a handoff from an adjacent cell to this cell. Generally, the gradual increasing of the cell power will not interfere greatly with user terminals. For user terminals in off-network state, a registration will be initiated after signals from a cell is received, and then user terminals access the cell randomly. If the cell power is increased slowly, the coverage radius of signals from the cell is also increased slowly, thus the collision deficiency may be avoided which results from simultaneous access of a large number of user terminals due to the sudden change of cell power. In a cell deletion process, for user terminals in service connection state, the impact on the communication quality is relatively sluggish due to the decrease of cell power step by step. When the quality of signal measured from a cell is decreased to a certain level, user terminals may perform a handoff from this cell to an adjacent cell. Generally, the stepwise decreasing of the cell power may not cause call drop of the user terminals, and the stepwise decreasing of the cell power may also not cause user terminals in idle state to drop network.

A reference index is necessary for adjusting the cell power step by step. In the embodiments of the present invention, the reference index is provided, and the reference index is variable in the power change process. Additionally, the process for adjusting the cell power may include both increasing the cell power and decreasing the cell power. Furthermore, the embodiments of the present invention further provide various means for adjusting cell power. The above technical features and technical means may not only be used as optional choices for implementing the present invention by a person skill in the art, but also be used for dealing with various special situations or unexpected events in practical application.

The above description is only the preferred embodiments of the present invention. It is apparent that those skilled in the art can make various improvements and modifications without departing from the present invention. Accordingly, it is intended to encompass these improvements and modifications within the scope of the present invention as defined by the appended claims and their equivalents.

## Claims

1. A method for controlling cell power, comprising:
configuring a power change reference; and
adjusting a cell power step by step according to the power change reference.

2. The method according to claim 1, wherein, the power change reference comprises an amplitude of each change and a time interval between two changes determined according to a target value; wherein,
the process of adjusting the cell power step by step according to the power change reference comprises:
adjusting the cell power step by step according to the amplitude of each change and the time interval between two changes that are configured.

3. The method according to claim 1, wherein, the process of configuring a power change reference comprises:
01) configuring an amplitude of a current change and a time interval of the current change according to a target value and current system environment;
the process of adjusting the cell power step by step according to the power change reference comprises,
02) adjusting the cell power according to the amplitude of the current change; and
03) determining whether the adjusted cell power reaches the target value, if the adjusted cell power reaches the target value, the adjusting process ends; otherwise, step 01) is re-executed after the time interval elapses.

4. The method according to claim 1, wherein, the power change reference is a power change step and/or a power change frequency determined according to a target value.

5. The method according to claim 1, wherein, the adjusting of the cell power comprises increasing or decreasing the cell power,

6. The method according to claim 2 or 3 or 4, wherein, the target value comprises an actual operating power or zero power.

7. The method according to claim 1, wherein, the cell power is adjusted by:
adjusting the attenuation gain of a channel attenuator in radio frequency part; and/or
adjusting static power level of a cell in baseband part; and/or
adjusting a pilot channel power.

8. A device for controlling cell power, comprising:
a setting unit, adapted to set a power change reference; and
an adjusting unit, adapted to adjust a cell power step by step according to the power change reference.

9. The device according to claim 8, wherein, the setting unit further comprises:
a step setting module, adapted to set a power change step; and/or
a frequency setting module, adapted to set a power change frequency.

10. The device according to claim 8, wherein, the adjusting unit further comprises:
a power increasing module, adapted to increase the cell power according to the power change reference; and/or
a power decreasing module, adapted to decrease the cell power according to the power change reference.

11. The device according to claim 8, wherein, the adjusting unit comprises:
an attenuation gain adjusting unit, adapted to adjust the attenuation gain of a channel attenuator in radio frequency part; and/or
a power level adjusting unit, adapted to adjust the static power level of a cell in baseband part; and/or
a pilot channel power adjusting unit, adapted to adjust a pilot channel power.
